# EUROPEAN PATENT APPLICATION

(11) **EP 4 796 613 A1**
(43) Date of publication of application: **26.08.2026**
(21) Application number: 24880071.6
(22) Date of filing: 15.10.2024
(51) Int. Cl.: C09K 5/06

(54) **HIGH-THERMAL-EFFICIENCY PHASE CHANGE HEAT-DISSIPATING COMPOSITE MATERIAL CONTAINING IMMISCIBLE HETEROGENEOUS ORGANIC PHASE CHANGE MATERIAL AND ANISOTROPIC FILLER, AND METHOD FOR MANUFACTURING SAME**

(30) Priority: 17.10.2023 KR 20230138377; 15.01.2024 KR 20240005792
(71) Applicant: Pusan National University Industry-University Cooperation Foundation, Busan 46241 (KR)
(72) Inventor: KIM, Chae Bin, Busan 46241 (KR); LEE, Dong Hun, Busan 46241 (KR); JO, Yong Su, Busan 46241 (KR); AN, Se Hui, Busan 46241 (KR); NA, Chae Seong, Busan 46241 (KR)
(74) Representative: Gulde & Partner
(86) International application number: PCT/KR2024/015552
(87) International publication number: WO 2025/084734

(57) **Abstract**

The present invention relates to a high-thermal-efficiency phase change heat-dissipating composite material containing an immiscible heterogeneous organic phase change material and an anisotropic filler, and a method for manufacturing same, and, more specifically, to a high-thermal-efficiency phase change heat-dissipating composite material containing an immiscible heterogeneous organic phase change material and an anisotropic filler, and a method for manufacturing same, the phase change heat-dissipating composite material having a structure designed using an appropriate amount of a thermally conductive anisotropic filler so as to be capable of having high thermal conductivity, excellent shape stability, and efficient heat storage and heat management. The present invention relates to the high-thermal-efficiency phase change heat-dissipating composite material containing an immiscible heterogeneous organic phase change material and an anisotropic filler, and the method for manufacturing same, the material using hexagonal boron nitride (h-BN) and the immiscible heterogeneous organic phase change material, thereby exhibiting both high thermal conductivity and excellent shape stability.

## Description

### Technical Field

The present invention relates to a high-heat-efficiency phase-change heat-dissipation composite material comprising an immiscible two-component organic phase-change material and an anisotropic filler, and a method for producing the same, and more particularly, to a high-heat-efficiency phase-change heat-dissipation composite material comprising an immiscible two-component organic phase-change material and an anisotropic filler, which may exhibit high thermal conductivity, excellent shape stability, efficient heat storage, and heat management by having the structure of a phase-change composite material designed using an appropriate amount of a thermally conductive anisotropic filler, and a method for producing the same.

### Background Art

As electronic components become smaller and more functional, increasing the integration density, a problem arises in that the density of heat generated per unit area of a device is rapidly increasing. If the heat generated in a device in use is not immediately dissipated, and thus the heat density increases, overheating of the device can shorten the device's lifespan and reduce the performance, and furthermore, can lead to serious problems, such as explosion.

To solve the above problems, the need for development of heat-dissipation composite materials to effectively dissipate unnecessary heat generated in devices under operation has increased, and accordingly, research related thereto has been conducted.

The thermal conductivity within a heat-dissipation composite material is significantly influenced by a physical heat-transfer path formed by a thermally conductive filler. The heat-transfer path is highly dependent on the content of the filler. As the content of the filler increases, the formation of a heat-conducting path becomes easier, but a problem arises in that the density of the heat-dissipating composite material increases and processability significantly decreases. Methods for maximizing heat transfer efficiency with a small amount of a filler include a method of forming an efficient filler network within the matrix.

Phase-change materials (PCMs) can absorb external heat and release it without temperature change during phase transition processes such as melting and solidification, and thus have attracted great interest in the thermal energy storage field. Accordingly, research has been actively conducted to use these phase-change materials as heat-dissipation composite materials.

Among phase-change materials, organic phase-change materials are less corrosive and toxic than inorganic phase-change materials and are less expensive. However, they have limitations such as very low inherent thermal conductivity and latent heat capacity. The low thermal conductivity of the organic phase-change materials slows down the phase change rate and makes efficient heat dissipation difficult at the applied location.

Due to the limitations described above, there is a need to develop a high-heat-efficiency phase-change composite material that can overcome the low thermal conductivity of organic phase-change materials and efficiently absorb and release a large amount of heat.

### DISCLOSURE

### Technical Problem

An object of the present invention is to provide a high-heat-efficiency phase-change heat-dissipation composite material comprising an immiscible two-component organic phase-change material and an anisotropic filler, which is capable of overcoming the low thermal conductivity of an organic phase-change material and efficiently absorbing and releasing a large amount of heat, and a method for producing the same.

Another object of the present invention is to provide a high-heat-efficiency phase-change heat-dissipation composite material comprising an immiscible two-component organic phase-change material and an anisotropic filler, which is capable of exhibiting high thermal conductivity, excellent shape stability, and efficient heat storage and heat management, and a method for producing the same.

The technical problems to be solved by the present invention are not limited to the technical problems mentioned above, and other technical problems not mentioned may be clearly understood by those of ordinary skill in the art from the description of the present invention.

### Technical Solution

To achieve the above objects, the present invention provides a high-heat-efficiency phase-change heat-dissipation composite material comprising: an immiscible two-component organic phase-change material; and a thermally conductive anisotropic filler, wherein the immiscible two-component organic phase-change material comprises a hydrophobic paraffinic phase-change material and a hydrophilic phase-change material, and the thermally conductive anisotropic filler exhibits hydrophobicity.

In the present invention, the immiscible two-component organic phase-change material may comprise the hydrophobic paraffinic phase-change material and the hydrophilic phase-change material mixed at a volume ratio of 1: (0.5 to 1.5).

In the present invention, the hydrophobic paraffinic phase-change material may be paraffin wax, and the hydrophilic phase-change material may be polyethylene glycol.

In the present invention, the thermally conductive anisotropic filler may be hexagonal boron nitride (h-BN).

In the present invention, the thermally conductive anisotropic filler may be comprised in an amount of 1 to 9 vol% based on 100 vol% of the phase-change heat-dissipation composite material.

In the present invention, the phase-change heat-dissipation composite material may exhibit a latent heat enthalpy of 120 to 240 J/g.

In the present invention, the thermally conductive anisotropic filler may be comprised in an amount of 10 to 49 vol% based on 100 vol% of the phase-change heat-dissipation composite material.

In the present invention, the phase-change heat-dissipation composite material may exhibit a thermal conductivity of 1 to 10 W/mK.

In the present invention, the thermally conductive anisotropic filler may be comprised in an amount of 50 to 60 vol% based on 100 vol% of the phase-change heat-dissipation composite material.

In the present invention, the phase-change heat-dissipation composite material may exhibit a thermal conductivity of 10 to 20 W/mK.

In the present invention, the thermally conductive anisotropic filler may have a size of 20 to 40 µm.

In the present invention, the phase-change heat-dissipation composite material may have a structure in which the thermally conductive anisotropic filler is attached to any one or more portions of the surface of a droplet of the hydrophilic phase-change material included in the immiscible two-component organic phase-change material to form a network.

The present invention provides a method for producing a high-heat-efficiency phase-change heat-dissipation composite material comprising an immiscible two-component organic phase-change material and an anisotropic filler, the method comprising: a step of preparing an immiscible two-component organic phase-change material by melting and mixing a hydrophobic paraffinic phase-change material and a hydrophilic phase-change material; and a step of adding a thermally conductive anisotropic filler to the immiscible two-component organic phase-change material.

In the present invention, the step of preparing the immiscible two-component organic phase-change material may comprise simultaneously melting the hydrophobic paraffinic phase-change material and the hydrophilic phase-change material at a temperature of 50 to 70°C.

In the present invention, the step of preparing the immiscible two-component organic phase-change material may comprise mixing the hydrophobic paraffinic phase-change material and the hydrophilic phase-change material at a volume ratio of 1: (0.5 to 1.5).

In the present invention, the hydrophobic paraffinic phase-change material may be paraffin wax, and the hydrophilic phase-change material may be polyethylene glycol.

In the present invention, the thermally conductive anisotropic filler may be hexagonal boron nitride (h-BN).

In the present invention, the thermally conductive anisotropic filler may be added in an amount of 1 to 9 vol% based on 100 vol% of the phase-change heat-dissipation composite material.

In the present invention, the thermally conductive anisotropic filler may be added in an amount of 10 to 49 vol% based on 100 vol% of the phase-change heat-dissipation composite material.

In the present invention, the thermally conductive anisotropic filler may be added in an amount of 50 to 60 vol% based on 100 vol% of the phase-change heat-dissipation composite material.

In the present invention, the step of adding the thermally conductive anisotropic filler may comprise adding and mixing a thermally conductive anisotropic filler having a size of 20 to 40 µm.

### Advantageous Effects

According to the above technical solution, the present invention may provide a high-heat-efficiency phase-change heat-dissipation composite material comprising an immiscible two-component organic phase-change material and an anisotropic filler, which is capable of overcoming the low thermal conductivity of an organic phase-change material and efficiently absorbing and releasing a large amount of heat, and a method for producing the same.

In addition, the present invention may provide a high-heat-efficiency phase-change heat-dissipation composite material comprising an immiscible two-component organic phase-change material and an anisotropic filler, which is capable of exhibiting high thermal conductivity, excellent shape stability, and efficient heat storage and heat management, and a method for producing the same.

In addition, the present invention may provide a high-heat-efficiency phase-change composite material that may be mass-produced through a simple production process, and a method for producing the same.

In addition, the present invention may provide a high-heat-efficiency phase-change composite material that may be used as a heat-dissipation material for electronic devices, a material for construction, and a material for roads, which are capable of absorbing and releasing heat depending on the external temperature, and a method for producing the same.

In addition, the present invention may provide a high-heat-efficiency phase-change heat-dissipation composite material comprising an immiscible two-component organic phase-change material and an anisotropic filler, whose latent heat capacity and thermal conductivity may be controlled by controlling the amount of thermally conductive anisotropic filler added, and a method for producing the same.

The effects of the present invention are not limited to the effects mentioned above, and other effects not mentioned will be clearly understood by those skilled in the art from the description of the claims.

### Brief Description of Drawings

FIG. 1 shows a melting and solidification process according to a heating and cooling process of a phase-change material according to the present invention.
FIG. 2 shows a process of forming a network of a thermally conductive anisotropic filler by adding the filler to a two-component organic phase-change material according to the present invention.
FIG. 3 shows the filler content-dependent thermal conductivity of a phase-change composite material of the present invention.
FIG. 4 shows the filler content-dependent latent heat capacities of examples and comparative examples according to the present invention.
FIG. 5 shows the change in shape over time during high-temperature heating of examples and comparative examples according to the present invention.
FIG. 6 shows the change in shape over time during high-temperature heating of examples and comparative examples according to the present invention.

### Best Mode

The terms used in the present specification are currently widely used general terms selected in consideration of their functions in the present invention, but they may change depending on the intents of those skilled in the art, precedents, or the advents of new technology. Additionally, in certain cases, there may be terms arbitrarily selected by the applicant, and in this case, their meanings will be described in a corresponding description part of the present invention. Accordingly, terms used in the present invention should be defined based on the meaning of the term and the entire contents of the present invention, rather than the simple term name.

Unless otherwise defined, all terms used herein, including technical or scientific terms, have the same meanings as understood by those skilled in the art to which the present disclosure pertains. Terms such as those used in general and defined in dictionaries should be interpreted as having meanings identical to those specified in the context of related technology. Unless definitely defined in the present application, the terms should not be interpreted as having ideal or excessively formative meanings.

A numerical range includes numerical values defined in the range. Every maximum numerical limitation given throughout the present specification includes every lower numerical limitation, as if such lower numerical limitations were expressly written herein. Every minimum numerical limitation given throughout the present specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

### High-heat-efficiency phase-change heat-dissipation composite material comprising immiscible two-component organic phase-change material and anisotropic filler

The present invention relates to a high-heat-efficiency phase-change heat-dissipation composite material comprising an immiscible two-component organic phase-change material and an anisotropic filler.

The present invention relates to a high-heat-efficiency phase-change heat-dissipation composite material comprising: an immiscible two-component organic phase-change material; and a thermally conductive anisotropic filler, wherein the immiscible two-component organic phase-change material comprises a hydrophobic paraffinic phase-change material and a hydrophilic phase-change material, and the thermally conductive anisotropic filler exhibits hydrophobicity.

The hydrophobic paraffinic phase-change material and the hydrophilic phase-change material may have a melting point of 50 to 60°C. When the hydrophobic paraffinic phase-change material and the hydrophilic phase-change material are simultaneously melted and mixed, the interaction between the two materials may be limited, resulting in phase separation.

Adding the hydrophobic thermally conductive anisotropic filler to the immiscible two-component organic phase-change material exhibiting phase separation may form droplets of the hydrophilic phase-change material to minimize the surface area with the hydrophilic phase-change material. The thermally conductive anisotropic filler may be attached to a portion of the surface of the droplet formed as described above, thereby reducing the interfacial instability of the high-heat-efficiency phase-change composite material. Due to the structural stability as described above, the phase-change composite material may have a high latent heat capacity. At the same time, a filler network structure in which the thermally conductive anisotropic filler particles are easily connected to each other may be formed, thereby increasing thermal conductivity.

When temperature is applied to the phase-change heat-dissipation composite material, the thermally conductive anisotropic filler may be positioned in the hydrophilic phase-change material, thereby stabilizing the structure, and at the same time, may be isolated within the hydrophobic paraffinic material.

Due to the above structure, the phase-change material in the phase-change heat-dissipation composite material may not leak and may exhibit high shape stability compared to a conventional composite material including a single-component matrix in which a thermally conductive filler is irregularly dispersed.

The phase-change heat-dissipation composite material is capable of storing and releasing heat during a melting and solidification process through heating and cooling.

In the present invention, the immiscible two-component organic phase-change material may comprise the hydrophobic paraffinic phase-change material and the hydrophilic phase-change material mixed at a volume ratio of 1: (0.5 to 1.5), preferably 1:1.

In the present invention, the hydrophobic paraffinic phase-change material may be paraffin wax, and the hydrophilic phase-change material may be polyethylene glycol, without being limited thereto.

In the present invention, the thermally conductive anisotropic filler may be hexagonal boron nitride (h-BN), without being limited thereto.

The hexagonal boron nitride may have high thermal conductivity and a high structural aspect ratio, and may be capable of easily forming a network between filler particles. The hexagonal boron nitride may exhibit hydrophobicity.

In the present invention, the thermally conductive anisotropic filler may be comprised in an amount of 1 to 9 vol% based on 100 vol% of the phase-change heat-dissipation composite material.

If the thermally conductive anisotropic filler is comprised in an amount of less than 1 vol%, a network through which heat transfer occurs within the two-component organic phase-change material may not be formed.

In the present invention, the phase-change heat-dissipation composite material may exhibit a latent heat enthalpy of 120 to 240 J/g. The phase-change heat-dissipation composite material may exhibit excellent heat-dissipation properties through the high latent heat enthalpy described above.

In the present invention, the thermally conductive anisotropic filler may be comprised in an amount of 10 to 49 vol% based on 100 vol% of the phase-change heat-dissipation composite material.

In the present invention, the phase-change heat-dissipation composite material may exhibit a thermal conductivity of 1 to 10 W/mK.

In the present invention, the thermally conductive anisotropic filler may be comprised in an amount of 50 to 60 vol% based on 100 vol% of the phase-change heat-dissipation composite material. If the thermally conductive anisotropic filler is comprised in an amount of more than 60 vol%, the amount of the immiscible two-component organic phase-change material included in the phase-change heat-dissipation composite material is small, and thus a network through which heat transfer occurs within the two-component organic phase-change material may not be formed.

In the present invention, the phase-change heat-dissipation composite material may exhibit a thermal conductivity of 10 to 20 W/mK. The phase-change heat-dissipation composite material may exhibit excellent heat-dissipation properties through the high thermal conductivity described above.

The latent heat enthalpy and thermal conductivity of the phase-change heat-dissipation composite material may be controlled by controlling the content of the thermally conductive anisotropic filler.

In the present invention, the thermally conductive anisotropic filler may have a size of 20 to 40 µm, 25 to 35 µm.

In the present invention, the phase-change heat-dissipation composite material may have a structure in which the thermally conductive anisotropic filler is attached to any one or more portions of the surface of a droplet of the hydrophilic phase-change material included in the immiscible two-component organic phase-change material to form a network.

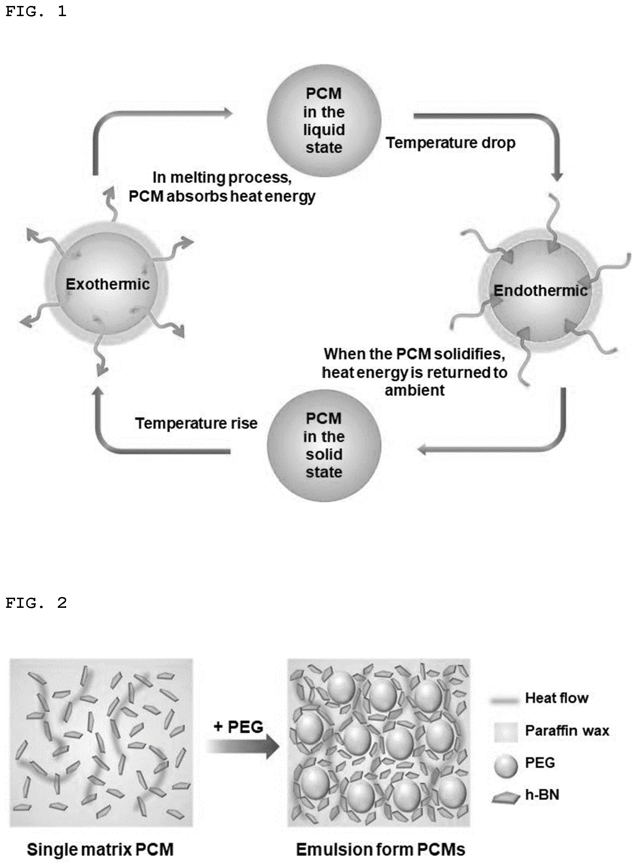

The network may be formed as shown in FIG. 2, and may be a path through which heat transfer occurs within the composite material.

The phase-change heat-dissipation composite material may be used as a heat-dissipation material for electronic devices, a material for construction, and a material for roads, without being limited thereto.

### Method for producing high-heat-efficiency phase-change heat-dissipation composite material comprising immiscible two-component organic phase-change material and anisotropic filler

The present invention relates to a method for producing a high-heat-efficiency phase-change heat-dissipation composite material comprising an immiscible two-component organic phase-change material and an anisotropic filler.

The present invention provides a method for producing a high-heat-efficiency phase-change heat-dissipation composite material comprising an immiscible two-component organic phase-change material and an anisotropic filler, the method comprising: a step of preparing an immiscible two-component organic phase-change material by melting and mixing a hydrophobic paraffinic phase-change material and a hydrophilic phase-change material; and a step of adding a thermally conductive anisotropic filler to the immiscible two-component organic phase-change material.

When temperature is applied to the phase-change heat-dissipation composite material production according to the above-described production method, the thermally conductive anisotropic filler may be positioned in the hydrophilic phase-change material, thereby stabilizing the structure, and at the same time, may be isolated within the hydrophobic paraffin material.

Due to the above-described structure, the phase-change material in the phase-change heat-dissipation composite material may not leak and may exhibit high shape stability compared to a conventional composite material including a single-component matrix in which a thermally conductive filler is irregularly dispersed.

In the present invention, the step of preparing the immiscible two-component organic phase-change material may comprise simultaneously melting the hydrophobic paraffinic phase-change material and the hydrophilic phase-change material at a temperature of 50 to 70°C.

The hydrophobic paraffinic phase-change material and the hydrophilic phase-change material may have a melting point of 50 to 60 °C. When the hydrophobic paraffinic phase-change material and the hydrophilic phase-change material are simultaneously melted and mixed, the interaction between the two materials may be limited, resulting in phase separation.

Adding the hydrophobic thermally conductive anisotropic filler to the immiscible two-component organic phase-change material exhibiting phase separation may form droplets of the hydrophilic phase-change material to minimize the surface area with the hydrophilic phase-change material. The thermally conductive anisotropic filler may be attached to a portion of the surface of the droplet formed as described above, thereby reducing the interfacial instability of the high-heat-efficiency phase-change composite material. Due to the structural stability as described above, the phase-change composite material may have a high latent heat capacity. At the same time, a filler network structure in which the thermally conductive anisotropic filler particles are easily connected to each other may be formed, thereby increasing thermal conductivity.

In the present invention, the step of preparing the immiscible two-component organic phase-change material may comprise mixing the hydrophobic paraffinic phase-change material and the hydrophilic phase-change material at a volume ratio of 1: (0.5 to 1.5).

In the present invention, the hydrophobic paraffinic phase-change material may be paraffin wax, and the hydrophilic phase-change material may be polyethylene glycol, without being limited thereto.

In the present invention, the thermally conductive anisotropic filler may be hexagonal boron nitride (h-BN), without being limited thereto.

The hexagonal boron nitride may have high thermal conductivity and a high structural aspect ratio, and may be capable of easily forming a network between filler particles. The hexagonal boron nitride may exhibit hydrophobicity.

In the present invention, the thermally conductive anisotropic filler may be added in an amount of 1 to 9 vol% based on 100 vol% of the phase-change heat-dissipation composite material.

If the thermally conductive anisotropic filler is comprised in an amount of less than 1 vol%, a network through which heat transfer occurs within the two-component organic phase-change material may not be formed. The high-heat-efficiency phase-change heat-dissipation composite material produced by adding the thermally conductive anisotropic filler at the above-described volume ratio may exhibit a high latent heat enthalpy of 120 to 240 J/g, thereby exhibiting excellent heat dissipation properties.

In the present invention, the thermally conductive anisotropic filler may be added in an amount of 10 to 49 vol% based on 100 vol% of the phase-change heat-dissipation composite material.

The high-heat-efficiency phase-change heat-dissipation composite material produced by adding the thermally conductive anisotropic filler at the above-described volume ratio may exhibit a thermal conductivity of 1 to 10 W/mK.

In the present invention, the thermally conductive anisotropic filler may be added in an amount of 50 to 60 vol% based on 100 vol% of the phase-change heat-dissipation composite material.

If the thermally conductive anisotropic filler is added in an amount of more than 60 vol%, the amount of the immiscible two-component organic phase-change material included in the phase-change heat-dissipation composite material is small, and thus a network through which heat transfer occurs within the two-component organic phase-change material may not be formed.

The high-heat-efficiency phase-change heat-dissipation composite material produced by adding the thermally conductive anisotropic filler at the above-described volume ratio may exhibit a thermal conductivity of 10 to 20 W/mK. The phase-change heat-dissipation composite material may exhibit excellent heat dissipation properties through the above-described high thermal conductivity.

In the method for producing the phase-change heat-dissipation composite material, latent heat enthalpy and thermal conductivity of the composite material may be controlled by controlling the amount of thermally conductive anisotropic filler added.

In the present invention, the step of adding the thermally conductive anisotropic filler may comprise adding and mixing a thermally conductive anisotropic filler having a size of 20 to 40 µm. Preferably, it may comprise adding and mixing a thermally conductive anisotropic filler having a size of 25 to 35 µm.

### Mode for Invention

### Examples

Hereinafter, examples of the present invention will be described in detail, but it is obvious that the present invention is not limited by the following examples.

The advantages and features of the present invention, and the way of attaining them, will become apparent with reference to the embodiments below described in detail. However, the present invention is not limited to the embodiments disclosed below and may be embodied in a variety of different forms. Rather, these embodiments are provided so that this disclosure will be thorough and complete, and will fully convey the scope of the present invention to those skilled in the art. The present invention will be defined only by the scope of the claims.

### <Example 1> Immiscible two-component organic phase-change heat-dissipation material (PPB)

Polyethylene glycol was added to a paraffin wax single-component matrix at a volume ratio of 1:1 and then mixed through stirring, thereby preparing an immiscible two-component organic phase-change material matrix. A hexagonal boron nitride (h-BN) filler was added to the immiscible two-component organic phase-change material matrix, thereby producing a phase-change heat-dissipation composite material comprising a thermally conductive anisotropic filler. The h-BN filler was added in the amounts shown in Table 1 and Table 2 below.

### <Comparative Example 1> Paraffinic single-component matrix phase-change material (PWB)

A hexagonal boron nitride (h-BN) filler was added to a single-component paraffin wax matrix. The h-BN filler was added in the amounts shown in Table 1 and Table 2 below.

### <Comparative Example 2> Non-paraffinic single-component matrix phase change material (PEGB)

A hexagonal boron nitride (h-BN) filler was added to a polyethylene glycol single-component matrix. The h-BN filler was added in the amounts shown in Table 1 and Table 2 below.

### <Experimental Example 1> Measurement of thermal conductivity depending on filler content

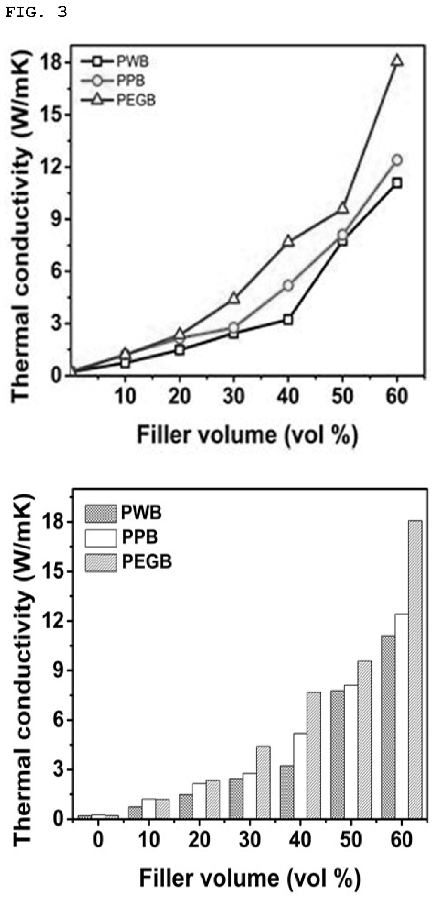

The filler content-dependent thermal conductivities of the phase-change materials produced in Example 1 and Comparative Examples 1 and 2 were measured, and the results are shown in FIG. 3. The h-BN filler content based on 100 vol% of the phase-change material is shown in Table 1 below.

**[Table 1]**

| | | | | | | |
|---|---|---|---|---|---|---|
| h-BN filler content | 10% | 20% | 30% | 40% | 50% | 60% |

As shown in FIG. 3, the immiscible two-component organic phase-change heat-dissipation composite material of Example 1 exhibited higher thermal conductivity than the single-component matrix phase-change materials of Comparative Examples 1 and 2 in all the h-BN filler contents.

From the above results, it was confirmed that the phase-change heat-dissipation composite material comprising the immiscible two-component organic phase-change material and the anisotropic filler according to the present invention exhibited excellent thermal conductivity compared to the phase-change material comprising the single-component phase-change material matrix and the anisotropic filler.

### <Experimental Example 2> Measurement of latent heat enthalpy depending on filler content

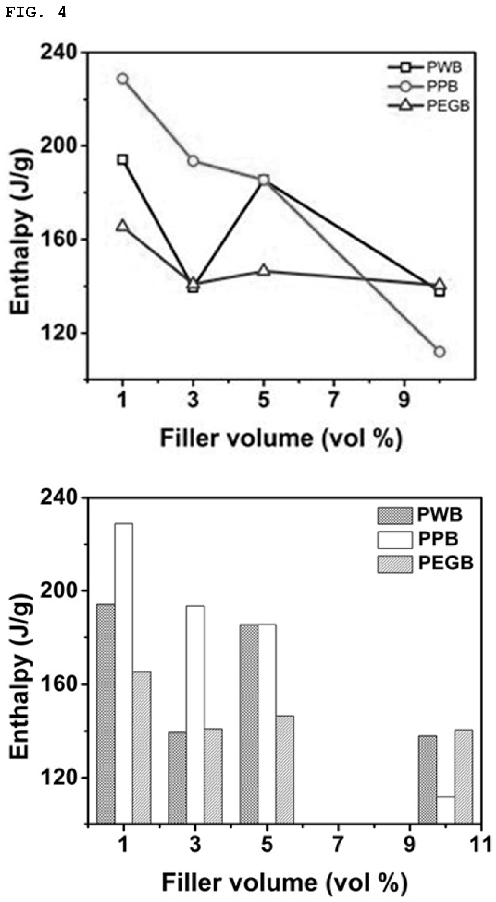

The h-BN filler content-dependent latent heat enthalpies of the phase-change materials produced in Example 1 and Comparative Examples 1 and 2 were measured, and the results are shown in FIG. 4. The h-BN filler content based on 100 vol% of the phase-change material is shown in Table 2 below.

**[Table 2]**

| | | | | | |
|---|---|---|---|---|---|
| h-BN filler content | 1% | 3% | 5% | 9% | 10% |

As shown in FIG. 4, the organic phase-change composite material of Example 1 containing 1 to 5 vol% of the h-BN filler exhibited a higher latent heat enthalpy than the single-component matrix phase-change materials of Comparative Examples 1 and 2.

However, when the h-BN filler was contained in an amount of more than 5 vol%, the latent heat capacity of the phase-change heat-dissipation composite material of Example 1 was reduced, and when the h-BN filler was contained in an amount of more than 9 vol%, the phase-change heat-dissipation composite material exhibited a very low latent heat enthalpy compared to the single-component matrix phase-change materials of Comparative Examples 1 and 2.

From the above results, it was confirmed that the phase-change heat-dissipation composite material containing the anisotropic filler in an amount of 1 to 9 vol% based on the phase-change heat-dissipation composite material according to the present invention exhibited excellent latent heat enthalpy compared to the phase-change material containing the single-component phase-change material matrix and the anisotropic filler.

### <Experimental Example 3> Observation of change in shape over time

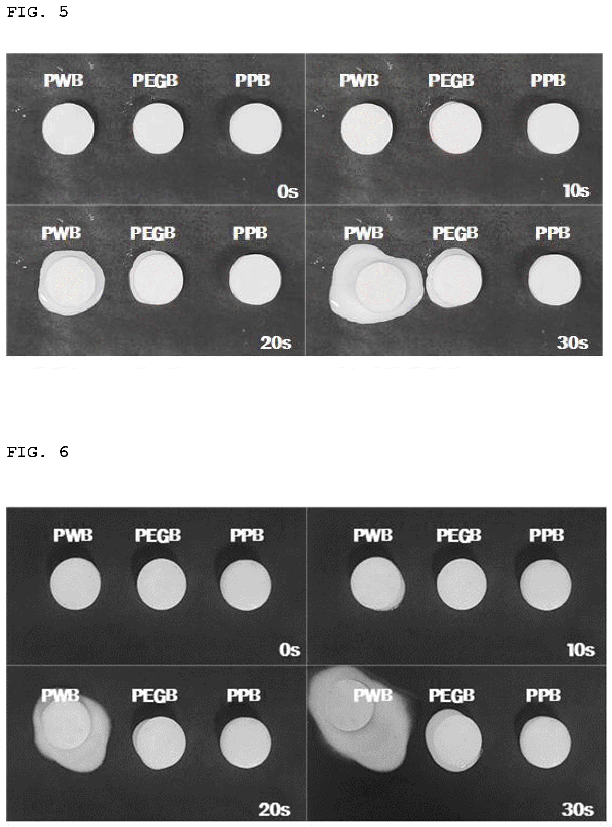

The phase-change material produced in each of Example 1 and Comparative Examples 1 and 2 was exposed to a temperature of 100°C, and then the change in shape over time was observed. The results are shown in FIG. 5. Here, the phase-change material contained the h-BN filler in an amount of 3 vol% based on 100 vol% of the phase-change material.

As shown in FIG. 5, it was observed that the single-component matrix phase-change materials of Comparative Examples 1 and 2 melted after 20 seconds of exposure to a temperature of 100°C, and that, after 30 seconds of exposure, a large amount of the phase-change materials melted and at the same time, the h-BN filler therein leaked out.

On the other hand, it was observed that the phase-change heat-dissipation composite material of Example 1 stably maintained its shape even after 30 seconds of exposure to a temperature of 100°C.

From the above results, it was confirmed that the phase-change heat-dissipation composite material comprising the immiscible two-component organic phase-change material and the anisotropic filler according to the present invention exhibited excellent shape stability compared to the phase-change material comprising the single-component phase change material matrix and the anisotropic filler.

### <Experimental Example 4> Observation of change in shape over time

The phase-change material produced in each of Example 1 and Comparative Examples 1 and 2 was exposed to a temperature of 100°C, and then the change in shape over time was observed. The results are shown in FIG. 6. Here, the phase-change material contained the h-BN filler in an amount of 20 vol% based on 100 vol% of the phase-change material.

As shown in FIG. 6, the paraffinic single-component matrix phase-change material of Comparative Example 1 began to melt after 10 seconds of exposure to a temperature of 100°C, and after 20 seconds of exposure, a large amount of the phase-change material melted and at the same time, the h-BN filler therein leaked out, indicating that the phase-change material did not maintain its shape.

In addition, it was observed that the non-paraffinic single-component matrix phase-change material of Comparative Example 2 melted after 20 seconds, and that, after 30 seconds, a large amount of the phase-change material melted and at the same time, the h-BN filler therein leaked out.

On the other hand, it was observed that the phase-change heat-dissipation composite material of Example 1 stably maintained its shape even after 30 seconds of exposure to a temperature of 100°C.

From the above results, it was confirmed that the phase-change heat-dissipation composite material comprising the immiscible two-component organic phase-change material and the anisotropic filler according to the present invention exhibited excellent shape stability compared to the phase-change material comprising the single-component phase change material matrix and the anisotropic filler.

## Claims

1. A high-heat-efficiency phase-change heat-dissipation composite material comprising:
an immiscible two-component organic phase-change material; and
a thermally conductive anisotropic filler,
wherein the immiscible two-component organic phase-change material comprises a hydrophobic paraffinic phase-change material and a hydrophilic phase-change material, and
the thermally conductive anisotropic filler exhibits hydrophobicity.

2. The high-heat-efficiency phase-change heat-dissipation composite material of claim 1, wherein the immiscible two-component organic phase-change material comprises the hydrophobic paraffinic phase-change material and the hydrophilic phase-change material mixed at a volume ratio of 1:(0.5 to 1.5).

3. The high-heat-efficiency phase-change heat-dissipation composite material of claim 1, wherein the thermally conductive anisotropic filler is hexagonal boron nitride (h-BN).

4. The high-heat-efficiency phase-change heat-dissipation composite material of claim 1, wherein the thermally conductive anisotropic filler is comprised in an amount of 1 to 9 vol% based on 100 vol% of the phase-change heat-dissipation composite material.

5. The high-heat-efficiency phase-change heat-dissipation composite material of claim 1, wherein the thermally conductive anisotropic filler is comprised in an amount of 10 to 49 vol% based on 100 vol% of the phase-change heat-dissipation composite material.

6. The high-heat-efficiency phase-change heat-dissipation composite material of claim 1, wherein the thermally conductive anisotropic filler is comprised in an amount of 50 to 60 vol% based on 100 vol% of the phase-change heat-dissipation composite material.

7. The high-heat-efficiency phase-change heat-dissipation composite material of claim 1, wherein the thermally conductive anisotropic filler has a size of 20 to 40 µm.

8. A method for producing a high-heat-efficiency phase-change heat-dissipation composite material comprising an immiscible two-component organic phase-change material and an anisotropic filler, the method comprising:
a step of preparing an immiscible two-component organic phase-change material by melting and mixing a hydrophobic paraffinic phase-change material and a hydrophilic phase-change material; and
a step of adding a thermally conductive anisotropic filler to the immiscible two-component organic phase-change material.

9. The method of claim 8, wherein the step of preparing the immiscible two-component organic phase-change material comprises simultaneously melting the hydrophobic paraffinic phase-change material and the hydrophilic phase-change material at a temperature of 50 to 70°C.

10. The method of claim 8, wherein the step of preparing the immiscible two-component organic phase-change material comprises mixing the hydrophobic paraffin-based phase-change material and the hydrophilic phase-change material at a volume ratio of 1:(0.5 to 1.5).

11. The method of claim 8, wherein the thermally conductive anisotropic filler is hexagonal boron nitride (h-BN).

12. The method of claim 8, wherein the thermally conductive anisotropic filler is added in an amount of 1 to 9 vol% based on 100 vol% of the phase-change heat-dissipation composite material.

13. The method of claim 8, wherein the thermally conductive anisotropic filler is added in an amount of 10 to 49 vol% based on 100 vol% of the phase-change heat-dissipation composite material.

14. The method of claim 8, wherein the thermally conductive anisotropic filler is added in an amount of 50 to 60 vol% based on 100 vol% of the phase-change heat-dissipation composite material.

15. The method of claim 8, wherein the step of adding the thermally conductive anisotropic filler comprises adding and mixing a thermally conductive anisotropic filler having a size of 20 to 40 µm.
